## Europäisches Patentamt
## European Patent Office
## Office européen des brevets

(11) Numéro de publication: **0 079 410**
**B1**

## FASCICULE DE BREVET EUROPÉEN

(45) Date de publication du fascicule du brevet:
**08.04.87**

(51) Int. Cl.⁴: **G 05 D 23/24**

(21) Numéro de dépôt: **81401787.7**

(22) Date de dépôt: **12.11.81**

(54) Dispositif à thermostat d'ambiance avec programmateur journalier.

(43) Date de publication de la demande:
**25.05.83 Bulletin 83/21**

(45) Mention de la délivrance du brevet:
**08.04.87 Bulletin 87/15**

(84) Etats contractants désignés:
**AT BE CH DE FR GB IT LI LU NL SE**

(56) Documents cité:
**FR-A-2 385 135**
**FR-A-2 429 810**
**FR-A-2 449 922**
**US-A-3 931 550**
**US-A-4 049 193**
**US-A-4 191 328**
**US-A-4 235 368**

(73) Titulaire: **Société DELTA DORE Société Anonyme, Le Vieux Chêne Bonnemain, F-35270 Combourg (FR)**

(72) Inventeur: **Renault, Joel Emmanuel, 2, rue du Champ Sévigné, F-35760 Saint Grégoire (FR)**

(74) Mandataire: **Le Guen, Louis François, Cabinet Louis Le Guen 1, avenue Edouard VII B.P. 91, F-35802 Dinard Cédex (FR)**

LIBER, STOCKHOLM 1987

## Description

La présente invention concerne un dispositif à thermostat d'ambiance avec programmateur journalier, comprenant un thermostat, une horloge numérique, un circuit de sélection de programme, un circuit de commutation de valeur de consigne et un circuit de commande du circuit de commutation contrôlé par la sortie numérique de l'horloge numérique et par le circuit de sélection de programme.

Dans le brevet FR 2 449 922, il est décrit un dispositif à thermostats d'ambiance combinés avec un interrupteur horaire, dans lequel un thermostat de jour est monté en série avec un thermostat de nuit et dans lequel le thermostat de jour peut être court-circuité par un contact commandé par un moteur d'horloge. Pour assurer le fonctionnement du moteur d'horloge en cas de panne du secteur, une batterie est prévue, laquelle est chargée en permanence par un circuit redresseur alimenté par le secteur. L'utilisation d'une batterie présente des inconvénients intrinsèques et le coût d'un circuit redresseur ainsi que la dépense en courant de charge sont importants. De plus, l'installation d'un moteur d'horloge avec les moyens, non décrits, de commande du contact de court-circuit conduit à un encombrement important. Enfin, en plus des deux fils vers la source de chaleur, il faut connecter le secteur.

Dans le brevet FR 2 423 810, il est décrit un dispositif à horloge numérique de commutations périodiques et programmées d'intervalles d'augmentation et d'abaissement de la température dans des locaux. Le dispositif comporte au moins deux thermostats qui sont commutés par la sortie d'un comparateur dont une entrée est reliée à la sortie d'une mémoire de temps courant et deux autres entrées sont respectivement reliées aux sorties de deux mémoires de temps de commutation programmables. Les moyens utilisés dans ce dispositif, c'est à dire mémoires numériques et comparateur numérique, sont relativement onéreux. Par ailleurs, le dispositif ne permet de programmer qu'une heure de début de température confort et qu'une heure de début de température abaissée. En outre, en cas de panne du secteur, l'horloge numérique n'est plus alimentée. Enfin, un troisième fil est prévu pour le fonctionnement de l'horloge.

Dans le brevet FR 2 385 135, il est décrit un dispositif comprenant un thermostat à deux valeurs de consigne, une horloge numérique dont la sortie est convertie en une tension analogique en forme de dent de scie d'une durée de 24 heures et une série de paire de comparateurs analogiques commutant les températures de consigne en fonction de paires de seuils analogiques atteints par la tension en dent de scie. Des batteries sont prévues pour alimenter l'horloge en cas de panne de secteur. Dans ce dispositif, les déterminations en mode analogique des instants de commutation ne permettent pas d'utiliser tous les avantages des techniques numériques. Enfin, il faut en dehors des fils vers la source de chaleur prévoir un raccordement au secteur.

Dans les documents US-A-4 191 328 et US-A-4 235 368 sont également décrits des dispositifs d'un genre voisin de ceux qui viennent d'être mentionnés, mais dans lesquels on utilise soit une générateur de temps spécial, soit un microprocesseur comportant son horloge, ce qui rend ces dispositifs complexes et coûteux.

Par ailleurs, la grande majorité des appartements et maisons particulières sont actuellement équipées d'un simple thermostat à température de consigne unique qui est relié, par deux fils électriques, à un dispositif de commande marche-arrêt de la chaudière ou de tout autre source de distribution de chaleur. On sait également que ces thermostats sont d'un emploi particulièrement simple pour l'utilisateur et que leur encombrement est réduit.

Un objet de l'invention consiste à prévoir un dispositif à thermostat d'ambiance permettant d'avoir deux températures de consigne, l'une dite de confort et l'autre dite d'économie ou d'abaissement qui puissent être prédéterminées en fonction de l'heure, un tel dispositif ne nécessitant également que deux fils pour la liaison avec le dispositif de commande de la source de chaleur, qui soit d'une utilisation simple et dont l'encombrement soit de l'ordre des thermostats simples mentionnés ci-dessus. De plus, le dispositif doit pouvoir être utilisé dans des locaux à vocations diverses, ce qui implique qu'il doit permettre le choix entre plusieurs programmes possibles allant par exemple jusqu'à comprendre jusqu'à trois périodes journalières à température de confort séparées par trois périodes à température d'abaissement.

Un autre objet de l'invention consiste à prévoir un dispositif à thermostat d'ambiance à programmateur journalier piloté par une horloge alimentée par une source de courant électrique constituée par des piles électriques. L'utilisation de piles électriques, qui se répand de plus en plus, n'impose qu'une condition, c'est-à-dire que la consommation des circuits alimentés par les piles soit très faible de manière à espacer au mieux leurs remplacements. L'utilisation d'horloges à affichage numérique alimentées par de simples piles est également de plus en plus répandue.

Les objets de l'invention mentionnés ci-desaus sont atteints par les combinaisons de moyens qui sont définies dans les revendications jointes.

Les objets et caractéristiques de l'invention apparaîtront plus clairement à la lecture de la description suivante d'exemples de réalisation, ladite description étant faite en relation avec les dessins joints, parmi lesquels:

la Fig. 1 est un bloc-diagramme du dispositif à thermostat suivant l'invention,

la Fig. 2 est le schéma de l'ensemble du thermostat, de la source à piles et du circuit de commande de signal de sortie du dispositif de la Fig. 1,

la Fig. 3 est le schéma de l'horloge, du convertisseur numérique/décimal et de la matrice de programmation du dispositif de la Fig. 1.

la Fig. 4 est le schéma du circuit de commutation de la valeur de consigne du thermostat,

les Figs. 5a à 5e sont des diagrammes illustrant cinq programmes de régulation différents,

la Fig. 6 montre une variante du circuit de commande de signal de sortie de la Fig. 2,

la Fig. 7 est le schéma d'une variante du convertisseur numérique/décimal de la Fig. 3, auquel est associé un détecteur de baisse de fem des piles,

la Fig. 8 est une vue en perspective de la face avant d'un dispositif suivant l'invention, et

la Fig. 9 est une vue en perspective de la face arrière du dispositif de la Fig. 8, avec son connecteur fixe représenté à part.

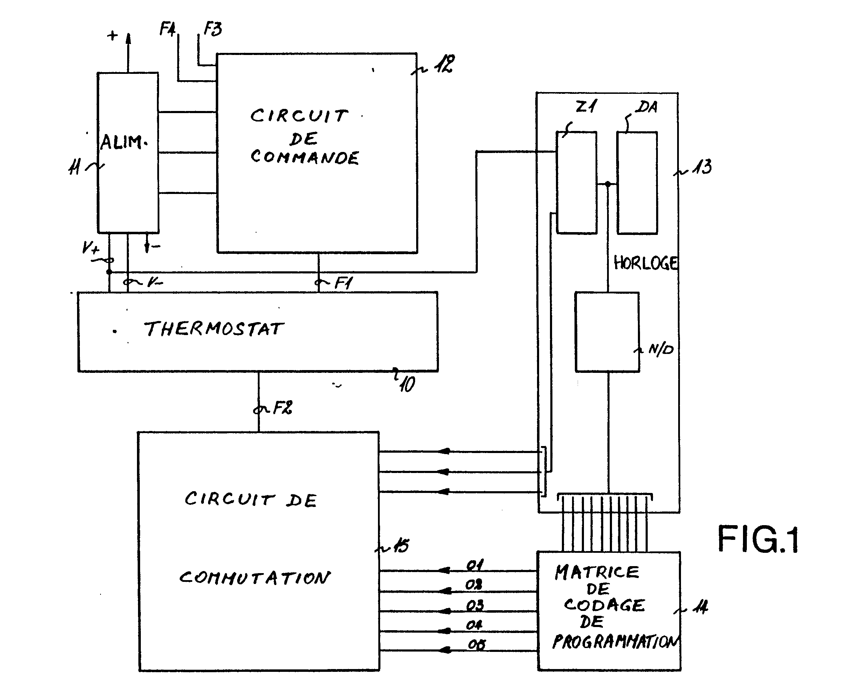

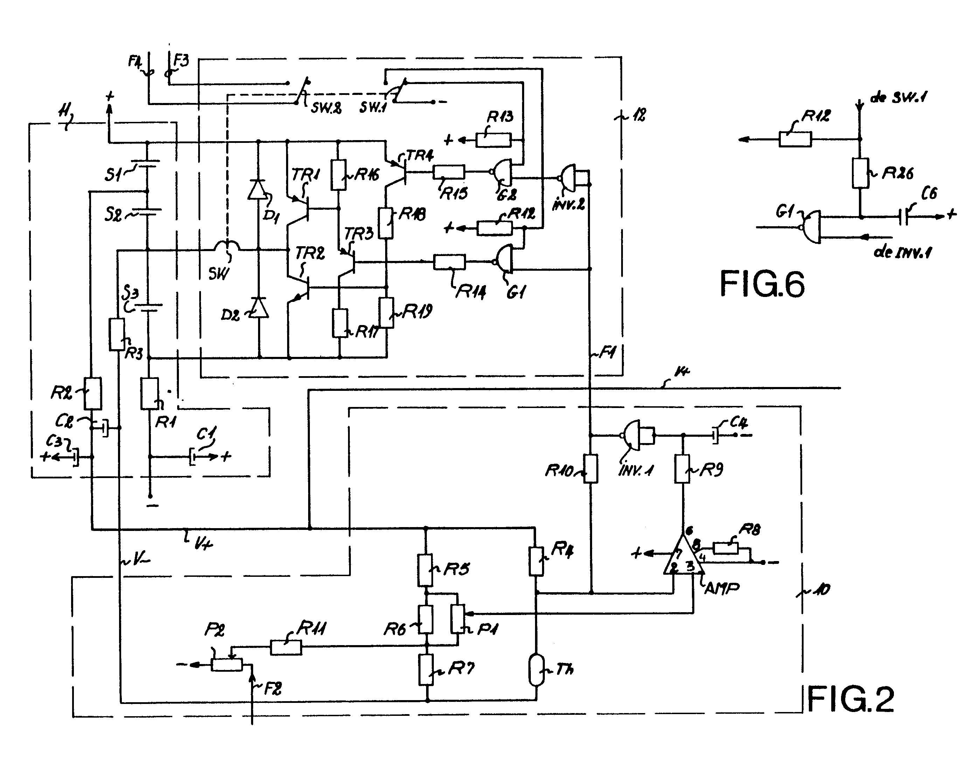

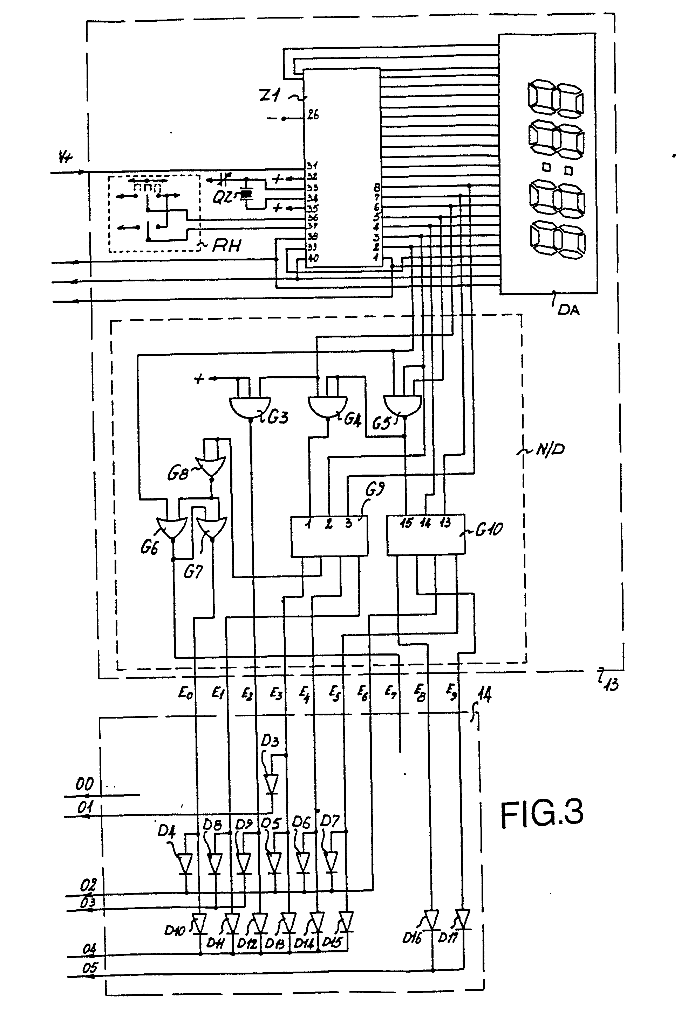

A la Fig. 1, le dispositif, suivant l'invention, comprend un thermostat (10), une source à piles électriques (11), un circuit de commande (12), capable d'actionner l'organe de commande de la source de chaleur (ou de froid), non montrée, une horloge numérique (Z1) à affichage (DA), un convertisseur (N/D), une matrice de codage de programmation (14) et un circuit de commutation (15).

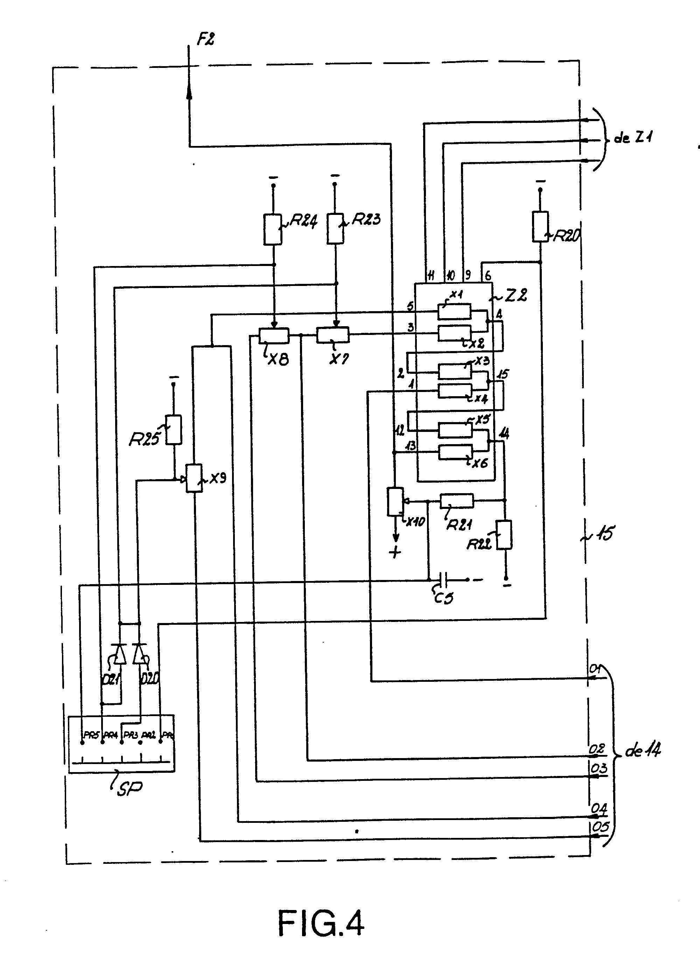

Comme le montre la Fig. 2, la source électrique à courant continu 11 est constituée par trois piles S1, S2 et S3, montées en série et d'une f.e.m. de 1,5 V chacune. La borne positive de la pile S1 est reliée à la borne + de la source tandis que la borne négative de la pile S3 est reliée par un résistance R1 de 1 kilohm à la borne - de la source. Entre les borne + et - de la source, est monté un condensateur C1 de 22 microfarads. De plus, les bornes positive et négative de la pile S2 sont respectivement reliées, par deux résistances R2 et R3 de 1 kilohm chacune, à deux fils V+ et V-, entre lesquels est monté un condensateur C2 de 2,2 microfarad. Entre le fil V+ et la borne + est également monté un condensateur C3 de 2,2 microfarads.

Le thermostat 10 comprend classiquement un pont dont une branche est constituée par une résistance R4 et une thermistance Th et dont l'autre branche est constituée par trois résistances R5, R6 et R7 en série, la résistance R6 étant montée en parallèle avec un potentiomètre P1. La borne commune à R4 et R5 est reliée au fil V+ tandis que la borne commune à Th et R7 est reliée au fil V-. La borne commune à R4 et Th est reliée à la borne "2" d'un amplificateur différentiel Amp tandis que le curseur du potentiomètre P1 est relié à la borne "3" de celui-ci. L'amplificateur Amp est, par exemple, du type LM 4250CN, avec sa borne "7" reliée à la borne +, sa borne "4" à la borne - et sa borne "8" à la borne - par une résistance R8 de 2,2 mégohms.

La sortie "6" de l'amplificateur Amp est reliée, par une résistance R9 de 470 kilohms et un condensateur C4 de 2,2 microfarads, à la borne -. La résistance R9 et le condensateur C4 constituent un circuit à retard. La borne commune à R9 et C4 est reliée à l'entrée d'un inverseur INV1, fonctionnant en trigger du type MC 14093BCP, dont la sortie est reliée, d'une part, à l'entrée "2" de l'amplificateur Amp, par une résistance R10 de 22 mégohms, pour former un circuit de réaction qui définit l'hystérésis du thermostat, et, d'autre part, à un fil F1 dont l'état haut définit l'état de demande de chaleur et l'état bas l'état de cessation de demande de chaleur.

Le point commun à R6 et R7 est encore relié par une résistance R11 au curseur d'un potentiomètre P2 dont une borne est reliée à la borne - de la source 11 et l'autre borne à un fil F2.

Dans le circuit de commande 12, le fil F1 est relié, d'une part, à l'entrée d'un inverseur logique INV2 et, d'autre part, à une entrée d'une porte NON-ET G1 dont l'autre entrée est reliée, d'une part, à la borne + de 11 par une résistance R12 de 2,2 mégohms et, d'autre part, au contact de travail d'un contact inverseur SW.1. La sortie de l'inverseur INV2 est reliée à une entrée d'une porte NON-ET G2 dont l'autre entrée est reliée, d'une part, à la borne + de 11 par une résistance R13 de 2,2 mégohms et, d'autre part, au contact de repos du contact SW.1. Le contact mobile de SW.1 est reliée à la borne - de la source 11.

Le contact SW.1 est le contact d'un relais électromagnétique bistable, du type EBERLE 408-21-024, dont la bobine SW est montée entre la borne commune à S2 et S3, d'une part, et le point commun aux deux collecteurs de deux transistors TR1 et TR2, d'autre part.

La sortie de la porte NON-ET G1 est reliée par une résistance R14 de 10 kilohms à la base d'un transistor PNP TR3 tandis que la sortie de la porte NON-ET G2 est reliée par une résistance R15 de 10 kilohms à la base d'un transistor PNP TR4. L'émetteur du transistor TR3 est relié, d'une part, à la base du transistor PNP TR1 et, d'autre part, à la borne + par une résistance R16 de 10 kilohms. Le collecteur du transistor TR3 est relié à la borne négative de S3 par une résistance R17 de 160 ohms. L'émetteur du transistor TR4 est directement relié à la borne + tandis que son collecteur est relié à la borne négative de S3 par deux résistances R18 de 160 ohms et R19 de 10 kilohms en série. Le point commun à R18 et R19 est relié à la base du transistor NPN TR2. L'émetteur de TR1 est relié à la borne + tandis que celui de TR2 est relié à la borne négative de S3. Entre la borne + et le point commun aux collecteurs de TR1 et TR2 est montée une diode D1 tandis qu'entre ce même point commun et la borne négative de S3 est montée une diode D2.

Le relais SW comporte un second contact de travail SW.2 qui, en position de travail, connecte deux fils F3 et F4 et, en position de repos, les déconnecte. Les fils F3 et F4 sont reliés à l'organe de commande de la source de chaleur, non montrée, et jouent exactement le même rôle que les fils de sortie d'un thermostat simple.

Dans la position montrée à la Fig. 2, le relais SW est au repos, le contact SW.2 est ouvert, ce qui signifie qu'il n'y a pas de demande de chauffage, et le contact SW.1 relie la borne - à une entrée de la porte G2, c'est à dire applique un état bas à cette entrée. La sortie de l'inverseur INV1 est aussi à l'état bas. Il en résulte que les sorties des portes G1 et G2 ne peuvent activer ni le transistor TR3, ni le transistor TR4, et, en conséquence, ni le transistor TR1, ni le transistor TR2. Ces deux derniers transistors étant bloqués, aucun courant ne traverse la bobine SW au repos.

Si, à la suite d'une diminution de la température ambiante, la sortie de INV1 passe à l'état haut, les deux entrées de la porte G1 sont à l'état haut, si bien que la sortie de G1 active le transistor TR3 qui, à son tour, rend le transistor TR1 conducteur. Un courant électrique peut passer de la borne + à la borne négative de S2, par le circuit émetteur-collecteur de TR1 et la bobine SW, laquelle change l'état de ses contacts SW.1 et SW.2. SW.2 ferme le circuit de F3 et F4 ce qui déclenche la source de chaleur et SW.1 fait passer une entrée de G1 à l'état bas, ce qui bloque les transistors TR3 et TR1, et une entrée de G2 à l'état haut, l'autre entrée de G2 étant maintenue à l'état bas par la sortie de INV2 dont l'entrée est à l'état haut, ce qui maintient les transistors TR2 et TR4 bloqués. Au moment de l'alimentation de la bobine SW qui se concrétise par un fort appel de courant, la tension aux bornes des piles baisse, mais sans perturber le fonctionnement des autres circuits électroniques, pour lesquels la tension d'alimentation est maintenue par le condensateur C1.

Quand la température de consigne est atteinte, la sortie de INV1 retombe à l'état bas, ce qui donne un état haut à la sortie de INV2. Donc la sortie de la porte G2 active le transistor TR4 qui débloque le transistor NPN TR2. Donc un courant électrique passe de la borne positive de S3 à sa borne négative, par la bobine SW et le circuit collecteur-émetteur du transistor TR2. Ainsi, la bobine SW est parcourue par un courant de sens différent que précédemment, si bien qu'elle ouvre son contact SW.2 et remet le contact SW.1 à l'état de repos, avec un état bas sur une entrée de G2, ce qui bloque les transistors TR2 et TR4, et un état haut sur une entrée de G1, mais l'autre entrée de G1 à l'état bas maintient les transistors TR3 et TR1 bloqués.

Il apparaît donc qu'entre les commutations de SW, la bobine n'est pas alimentée ce qui réduit considérablement la consommation demandée aux piles. Les diodes D1 et D2 sont prévues pour étouffer les courants de force contre-électromotrice induits par la bobine SW. Comme on le verra dans la suite, le fil F2 est au potentiel de la borne - en période de confort et à un potentiel plus positif que la borne - en période d'abaissement. Il en résulte que le point commun à R6 et R7 est plus négatif en période de confort qu'en période d'abaissement. Donc, la sortie de l'amplificateur différentiel Amp change d'état, pour une demande de chaleur, à une température plus élevée en période de confort qu'en période d'abaissement. En pratique, le potentiomètre P1 permet de régler la température de confort et le potentiomètre P2 permet de régler l'abaissement de température pour les périodes d'économie.

L'horloge numérique est une horloge du commerce qui, dans l'exemple décrit, se compose d'un circuit intégré Z1 et d'un dispositif d'affichage DA où les heures et les minutes sont affichées en code à sept segments classiques. Le circuit intégré Z1, du type ICM 7223 commercialisé par Intersil, est piloté par un quartz QZ à montage classique relié à ses bornes "33" et "34", et est alimenté par sa borne "32" reliée à la borne +, sa borne "31" reliée au fil V+ et sa borne "26" reliée à la borne -. Un circuit classique RH de remise à l'heure est relié aux bornes "36" et "37" de Z1.

Les bornes "2" à "8" du circuit Z1, servant à afficher le chiffre d'unité des heures, sont reliées aux entrées d'un convertisseur numérique/décimal N/D qui comprend trois portes NON-ET G3 à G5 du type MC 14023BCP, trois portes OU-NON G6 à G8 du type MC 14001BCP et deux circuits logiques G9 et G10 du type MC 14555BCP. La borne "2" de Z1 est reliée à une entrée de G5 et une entrée de G6. La borne "3" de Z1 est reliée à une entrée de G5 et une entrée de G9. La borne "4" de Z1 est reliée à une entrée de G10. La borne "5" de Z1 est reliée à la troisième entrée de G5. La sortie "6" de Z1 est reliée à une entrée de G3 et une entrée de G4. La sortie "7" de Z1 est reliée à une entrée de G10 tandis que la sortie "8" est reliée à une entrée de G9. La sortie de G5 est reliée à la troisième entrée de G10 et, en parallèle, à deux entrées de G4. La sortie de G4 est reliée à la troisième entrée de G9. Deux entrées de G3 sont reliées à la borne + et sa sortie est reliée à l'entrée E2 de la matrice 14. Le circuit G9 a quatre sorties dont la première reliée à l'entrée E3 de 14, la seconde aux entrées de G8, la troisième à l'entrée E4 et la quatrième à l'entrée E1 de 14. Le circuit G10 a quatre sorties, la première reliée à l'entrée E8, la seconde à l'entrée E9, la troisième à l'entrée E6 et la quatrième à l'entrée E5 de 14. La sortie de la porte G8 est reliée à une entrée de G6 et G7. La sortie de la porte G6 est reliée à une entrée de la porte G7 et l'entrée E7 de 14. Enfin, la sortie de G7 est reliée à l'entrée E0 de 14. Les bornes des circuits G9 et G10 portent les références numériques du constructeur.

En pratique, le convertisseur N/D convertit les informations binaires délivrées par Z1 sur ses sept bornes "2" à "8" en code un parmi dix sur les entrées E0 à E9 de la matrice 14. Chaque entrée E0 à E9 activée indique l'unité d'heure 0 à 9 affichée par DA. La structure du convertisseur N/D est donnée à titre d'exemple, mais il est bien évident qu'elle peut être réalisée avec d'autres composants que ceux qui sont montrés. C'est pourquoi on ne décrira pas en détail le fonctionnement de N/D.

La matrice de programmation 14 comporte trois paires de fils de sortie 00, non utilisée, et 01 à 05. Si l'on considère que des fils verticaux partent des entrées E0 à E9 et des fils horizontaux partant des sorties 01 à 05, on obtient une matrice de points de croisement, dont les fils peuvent être repérés par leurs points respectifs d'origine. Au point de croisement de E3 et de 01 est montée des diodes D3; aux points de croisement de E0, E3, E4, et E5, d'une part, et de 02, d'autre part, sont montées des diodes D4 à D7; aux points de croisement de E1 et E2, d'une part, et de 03, d'autre part, sont montées des diodes D8 et D9; aux points de croisement de E0 à E5, d'une part, et 04, d'autre part, sont montées des diodes D10 à D15; et aux points de croisement de E8 et E9, d'une part, et 05, d'autre part, sont montées des diodes D16 et D17. Toutes ces diodes sont montées dans le sens direct entre les entrées et les sorties de la matrice 14.

Le circuit de commutation 15, Fig. 4, comprend un circuit logique de commutation Z2 qui, dans l'exemple décrit, est du type MC 14053BCP, et un sélecteur de programme SP, ainsi qu'un certain nombre de composants que l'on verra dans la suite.

Dans le circuit Z2, on utilise les bornes "1" à "6" et "9" à "15". Le circuit Z2 comprend trois paires de contacts électroniques X1, X2; X3, X4; et X5, X6, chaque paire formant un inverseur. Le contact X1 relie les bornes "5" et "4" quand la borne "9" de Z2 est à l'état bas, tandis que le contact X2 relie les bornes "3" et "4", quand la borne "9" est à l'état haut. Le contact X3 relie les bornes "4" et "15", par "2", quand le borne "10" est à l'état bas, tandis que le contact X4 relie les bornes "1" et "15" quand la borne "10" est à l'état haut. Le contact X5 relie la borne "15" à "14", par "2", quand la borne "11" est à l'état bas tandis que le contact X6 relie "14" à "13" quand la borne "11" est à l'état haut. La borne "6" à l'état haut inhibe les contacts X1 à X6.

En ce qui concerne les liaisons externes du circuit Z2, sa borne "1" est reliée à la sortie 01 de la matrice 14, sa borne "3" est reliée à la sortie 02 par l'intermédiaire d'un contact électronique X7 et à la sortie 03 par l'intermédiaire de X7 et d'un autre contact électronique X8, sa borne "5" est reliée directement à la sortie 04 et, par l'intermédiaire d'un contact électronique X9, à la sortie 05. Par ailleurs, sa borne "6" est reliée, d'une part, à la borne - par une résistance R20 et, d'autre part au plot PR1 du sélecteur de programme SP. Sa borne "13" est reliée à la borne + par un contact électronique X10 dont l'entrée de commande est reliée, d'une part, au plot PR5 de SP et, d'autre part, à sa borne "14" par une résistance R21 de 1 mégohm. Sa borne "14" de Z2 est encore reliée à la borne - par une résistance R22 de 2,2 mégohms tandis que l'entrée de commande de X10 est reliée à la borne - par un condensateur C5 de 1 nanofarad. Enfin, ses bornes "9" et "10" sont respectivement reliée aux bornes "1" et "40" du circuit d'horloge Z1, tandis que l'entrée "11" est reliée à la sortie "38" de Z1. Les sorties "1" et "40" de Z1 délivrent l'information de chiffre de dizaine des heures, ce chiffre ne pouvant prendre que trois valeurs: 0 (non affiché sur DA), 1 ou 2.

La sortie "38" de Z1 délivre l'état du "panneau arrière BP" du dispositif d'affichage DA. On rappelle que le circuit ICM 7223 constituant le circuit Z1 délivre à chaque segment du dispositif d'affichage DA un signal alternatif à 32 Hz en phase ou en opposition de phase avec la sortie "panneau arrière selon l'état activé ou non du segment. Il en résulte également que les signaux appliqués par le circuit Z1 au convertisseur N/D sont des signaux alternatifs à 32 Hz si bien que les signaux délivrés aux bornes "1", "3" et "5" de, Z2 par le convertisseur N/D, à travers la matrice 14, ne sont valides que pendant l'état bas de la sortie "38" de Z2. Le circuit formé par X6 de Z2, R21, X10 et C5 permet de mémoriser l'état précédent de la borne "13" de Z2 pendant l'état haut de la sortie "38" de Z1. En effet, si l'état précédent des bornes "13" et "14", était bas, l'entrée de commande de X10 est à l'état bas et X10 est ouvert si bien que le potentiel de la borne - est appliqué à "13" à travers R22, 14 et X6. Si l'état précédent des bornes "13" et "14" était haut, le contact X10 est fermé, appliquant ainsi le potentiel de la borne + à la borne "13".

Le sélecteur de programme SP comprend cinq plots PR1 à PR5 qui peuvent être mis individuellement au potentiel de la borne + en l'actionnant. Comme on l'a mentionné ci-dessus, le plot PR1 est relié à la borne "6" de Z2 et le plot PR5 est relié à l'entrée de commande de X10. Pour les autres plots, PR2 est isolé, PR3 est relié, par une diode D18, respectivement aux entrées de commande des contacts électroniques X7 et X9, et le plot PR4 est relié, par une diode D19, respectivement aux entrées de commande des contacts électroniques X7 et X9, et est relié directement à l'entrée de commande du contact électronique X8. Les entrées de commande des contacts X7 à X9 sont reliées à la borne - par des résistances de charges R23 à R25.

Enfin, il faut noter encore que la borne "13" du circuit Z2 est reliée au fil de sortie F2 et constitue donc la borne de signal de sortie. En régime de confort, la borne "13" et le fil F2 sont isolés, tandis qu'en régime d'abaissement, ils sont au potentiel positif de la borne +. Donc, dans le premier cas, le curseur de P2, Fig. 2, est au potentiel de la borne - tandis que dans l'autre, il est a un potentiel intermédiaire entre + et - qui définit la différence de température.

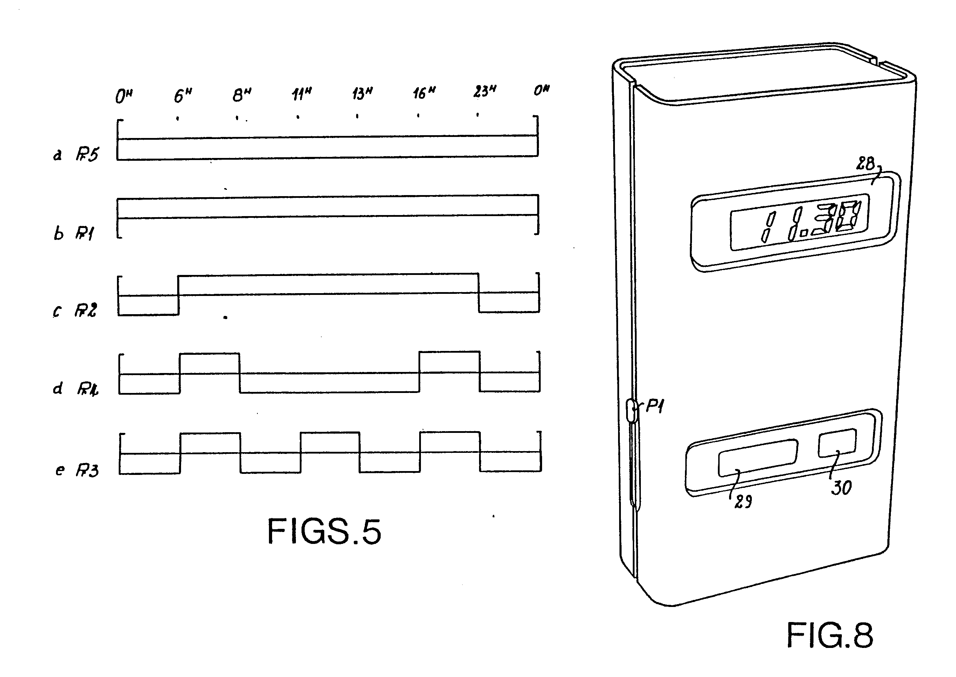

On va maintenant considérer les fonctionnements correspondant aux cinq programmes possibles (Fig. 5).

Quand PR1 est à la borne +, on est en état de confort permanent. En effet, quels que soient les signaux appliqués sur les bornes "1", "3", "5" "9" "10" et "11" de Z2 la borne "6" au + maintient les contacts X1 à X6 ouverts et "13" reste isolé.

Quand PR2 est relié à la borne +, les contacts X7 à X9 restent ouverts. Mais le fil 01 est actif quand l'unité d'heure vaut 3 et X4 est fermé quand le chiffre de dizaine d'heure est égal à 2. Donc, pour l'heure commençant à 23H, la borne "13" est reliée au +. De plus, le fil 04 est actif quand les chiffres d'unité d'heure valent de 0 à 5 et X1 et X3 sont fermés quand le chiffre de dizaine d'heure est nul. Donc, pour les heures commençant à 0H, 1H, ..., 5H, la borne "13" est aussi reliée au +. Il en résulte que le programme d'abaissement est appliqué entre 23H et 6H.

Quand le plot PR3 est relié au +, la situation que l'on vient de décrire est toujours valable, mais de plus, X7 et X9 étant fermés, le fil 02 excite la borne "3", quand la dizaine d'heure est égale à 1 et les unités de 0, 3, 4, 5 ou 6, et le fil 05 excite la borne "5" quand la dizaine d'heure est 0 et les unités 8 ou 9. Comme X2 est fermé dans un cas et X1 dans l'autre, on a donc un programme d'abaissement entre 23H et 6H, comme précédemment, plus un abaissement entre 8H et 11H et un autre entre 13H et 16H.

Quand le plot PR4 est relié au +, la situation que l'on vient de décrire est toujours valable, mais de plus X8 est fermé, ce qui entraîne un abaissement par le fil 03 entre 11H et 13H.

Quand PR5 est relié au +, le contact X10 est fermé en permanence, ce qui entraine un abaissement permanent.

On comprendra que la configuration de la matrice de diodes 14 a été donné à titre d'exemple, bien qu'elle permette de satisfaire aux besoins les plus courants des utilisateurs, il est possible de prévoir d'autres configurations permettant de satisfaire des utilisateurs ayant d'autres contraintes. On comprendra également que les diodes D3 à D19 ne sont que des exemples de points de croisement parmi d'autres. De même, la structure du circuit logique de la Fig. 4 pourrait être modifiée.

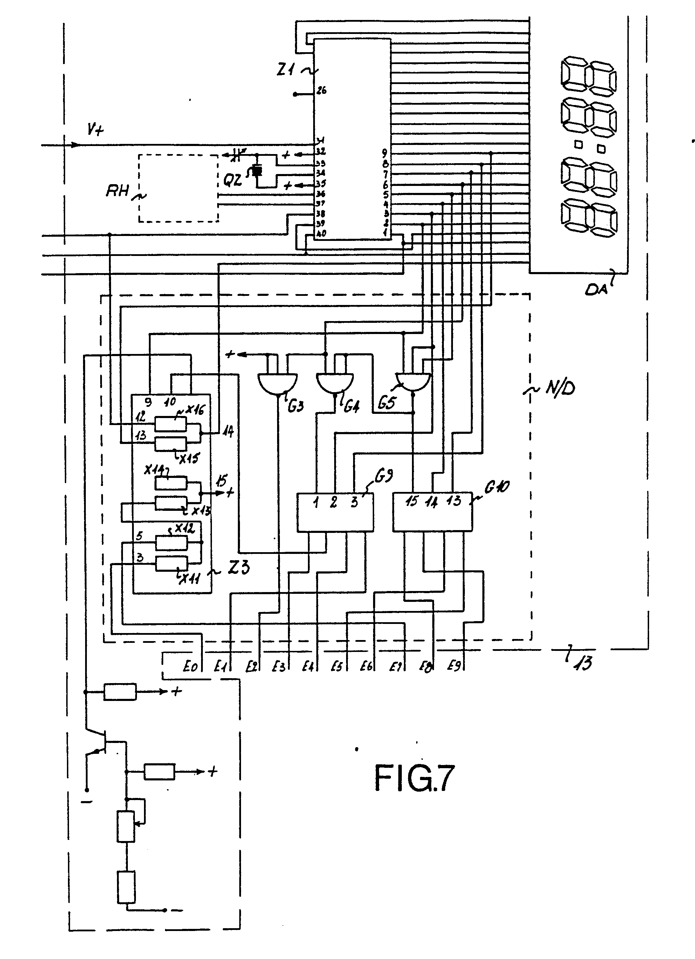

La Fig. 6 montre une variante du circuit 12, en ce qui concerne un circuit d'entrée de la porte G1, Fig. 2. Dans cette variante entre le contact SW.1 et l'entrée de G1, est montée une résistance R26. De plus, cette entrée de G1 est reliée à la borne + par un condensateur C6. La résistance R26 et le condensateur C6 forme un circuit à retard qui assure un décalage entre le changement d'état du contact SW.1 et celui qui en résulte pour la porte G1, il y a donc un léger décalage dans le temps. En pratique, ce décalage permet d'assurer que la porte G1 ne change d'état avant que le circuit magnétique du relais SW ne soit complètement fermé. En effet, il peut arriver que le contact SW.1 change d'état alors que la palette du relais n'ait fini sa course et que la force de l'aimant, l'enroulement n'étant déjà plus alimenté, soit insuffisante pour l'attirer complètement. Dans ce cas le relais retomberait. En ce qui conserne la porte G2, un tel circuit est inutile puisque de toute manière la palette s'éloigne.

A la Fig. 7, on a montré une variante du convertisseur N/D, on y retrouve les portes G3 à G5 et les circuits G9 et G10, mais l'ensemble des portes G6 à G8 a été remplacé par un circuit Z3 qui, dans l'exemple décrit, est du type MC 14053BCP, comme Z2. En outre, le circuit Z3 sert dans un circuit de contrôle de la tension des piles de la source 11.

Le circuit Z3 comprend trois paires de contacts électroniques X11 à X16. Le contact X11 est fermé quand la borne "9" est à l'état haut et le contact X12 est fermé dans le cas contraire. Le contact X13 est fermé quand la borne "10" est à l'état haut, le contact X14 ne servant pas dans l'exemple décrit. Le contact X15 est fermé quand la borne "11" est à l'état haut et le contact X16 est fermé dans le cas contraire. Par ailleurs, le circuit Z3 a sa borne "15" reliée à la borne +, ses bornes "1" et "2" reliées ensemble, sa borne "9" reliée à la sortie "2" du circuit Z1, sa borne "10" reliée à la seconde sortie du circuit G9, sa borne "5" reliée à l'entrée E0 de la matrice 14 et sa sortie "3" reliée à l'entrée E7 de la matrice 14.

Quand l'entrée "9" est à l'état haut et l'entrée "10" à l'état bas, le potentiel + de 15 est transmis à la borne "5", c'est à dire à E7, par X13 et X12. Quand l'entrée "9" est à l'état bas ainsi que l'entrée "10", le potentiel + de 15 est transmis à la borne "3", c'est à dire à E0, par X13 et X11. On pourra vérifier que l'on a le même résultat qu'avec le circuit de la Fig. 3.

La borne "11" est reliée au collecteur d'un transistor PNP TR5 dont l'émetteur est relié à la borne + et la base à un point intermédiaire d'un diviseur de tension formé, entre les bornes + et -, de la résistance R27 de 560 kilohms, du potentiomètre P3 de 47 kilohms et de la résistance R28 de 62 kilohms, le point intermédiaire se trouvant être le point commun à R27 et P3. Le collecteur de TR5 est relié à la borne + par une résistance R29 de 1 mégohm. Le curseur du potentiomètre permet de régler avec précision la tension de la base de TR5 par rapport à la tension de son émetteur.

La borne "12" de Z3 est reliée à la sortie "38" (panneau arrière) de Z1, cette sortie n'étant plus reliée directement à la borne "40" de l'afficheur DA, comme à la Fig. 3. La borne "13" de Z3 est reliée à la sortie "9" du circuit Z1, qui est reliée à l'afficheur DA pour assurer le clignotement à 1 Hz des points lumineux séparant les heures des minutes. La borne "14" de Z3 est reliée à la borne "40" de DA.

Normalement, quand les piles S1 à S3 sont encore chargées, la tension entre base et émetteur de TR5 est supérieure à 0,6 V, si bien que le transistor est saturé. La borne "11" est donc à l'état haut pour lequel le contact X15 est fermé si bien que la sortie "38" de Z1 est reliée par X15 à l'entrée "40" de l'afficheur DA et que le fonctionnement de ce dernier est correct.

Quand la tension aux bornes des piles a diminué suffisamment pour que la tension base émetteur de TR5 soit inférieure à 0,6 V, le transistor se bloque et l'état de la borne "11" passe à l'état bas. La borne "38" de Z1 n'est plus reliée à la borne "40", ce qui supprime l'information panneau arrière, mais la borne de clignotement "9" de Z1 est reliée, par X16, à la borne "40" de DA. Il en résulte que l'affichage complet clignote en alternant l'allumage des segments de l'indication correcte et l'allumage des autres segments, non utilisés dans l'indication correcte. L'usager est, par cet effet lumineux, informé que les piles doivent être changées.

Les diagrammes des Fig. 5a à 5e illustrent en fonction de l'heure les états confort ou abaissement pour les cinq programmes PR5, PR1, PR2, PR4 et PR3, respectivement.

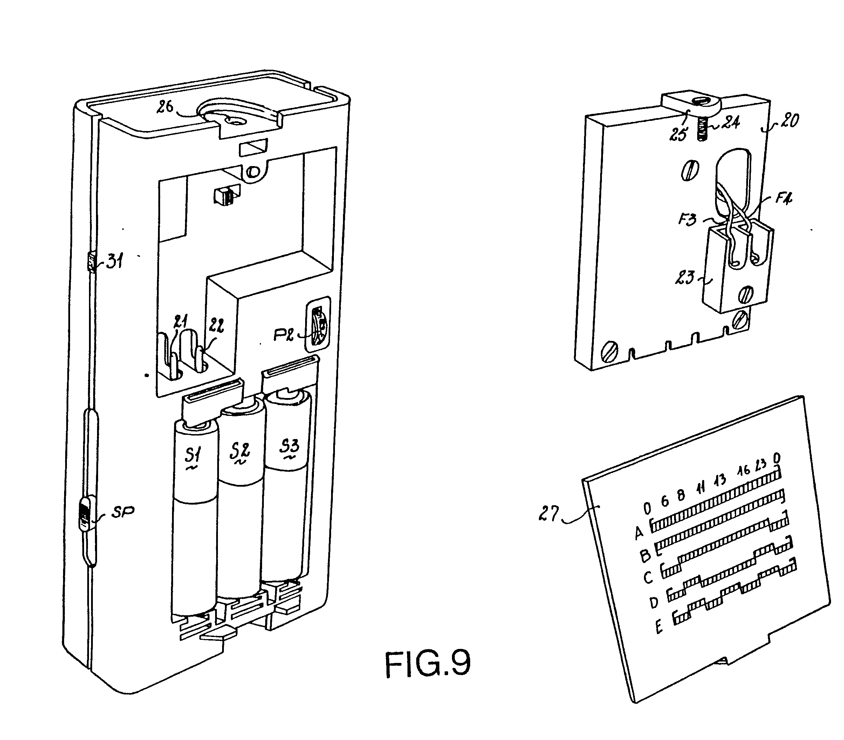

Les vues en perspective des Figs. 8 et 9 permettent d'apprécier les dimensions d'un exemple de réalisation d'un dispositif, suivant l'invention, en fonction de celles des piles S1 à S3. La Fig. 9 montre que l'appareil s'accroche sur une embase 20 fixée sur une cloison et reliée à la source de chaleur par les fils F3 et F4. L'appareil comporte deux fiches 21 et 22 qui s'insèrent de bas en haut dans les contacts d'une prise femelle 23 reliés aux fils F3 et F4. En haut de l'embase 20, une vis 24, portée par, une potence 25, est prévue pour se visser dans un trou taraudé 26 du boîtier de l'appareil. Le logement des piles S1 à S3 peut être fermé par une plaque coulissante 27 sur laquelle sont gravés ou inscrits les diagrammes des programmes des Figs. 5a à 5e. Sur un côté du boîtier, un bouton SP, manoeuvrable verticalement, permet de sélectionner un programme, tandis que l'autre côté du boîtier un bouton P1, manoeuvrable verticalement, permet de choisir la température confort. Sur la face avant du boîtier, en haut, une fenêtre 28 permet de lire l'heure sur l'afficheur et, en bas, deux fenêtres 29 et 30 permettent de lire la température de confort choisie et le programme choisi.

Le potentiomètre P2 est commandé par une molette qui est, de préférence, située à l'arrière caché du boîtier pour éviter toute manoeuvre intempestive et assurer ainsi une différence de température convenable entre la température confort et la température d'abaissement.

Des boutons 31 sur le côté de l'appareil permettent la mise à l'heure de l'horloge.

En cas d'utilisation dans des pays où l'heure est affichée uniquement de 0H à 11H, accompagnée d'une mention AM et PM, ou une mention analogue, les sorties de l'horloge correspondant à ces mentions seraient utilisées dans le circuit Z2, d'une manière analogue aux sorties des dizaines.

## Revendications

1) Dispositif à thermostat d'ambiance avec programmateur journalier, comprenant un thermostat (10), une horloge numérique (Z1) à dispositif d'affichage à sept segments (DA), un circuit de sélection de programme (SP) à deux valeurs de consigne, un circuit de commutation (15) de valeurs de consigne et un circuit de commande (14, N/D) du circuit de commutation contrôlé par les signaux de sortie numériques de l'horloge numérique (Z1) et par le circuit de sélection de programme (SP), caractérisé en ce que le circuit de commande (14, N/D) comprend un convertisseur numérique/décimal (N/D) et une matrice de points de croisement (14), le convertisseur numérique/décimal (N/D) étant relié à l'hologe numérique (Z1) et convertissant les données numériques d'unités d'heure en code un parmi dix, les dix sorties (E0 à E9) du convertisseur (N/D) étant reliées aux fils verticaux de la matrice de points de croisement (14) comportant trois paires de fils de sortie (00 à 05), lesdites paires de sortie étant respectivement affectées aux heures dont les chiffres des dizaines sont 2, 1 et 0, en ce que le circuit de commutation (15) comprend un circuit logique (Z2) et un jeu de contacts électroniques (X7 à X10), lesdites paires de sortie (00 à 05) étant reliées aux entrées correspondantes du circuit logique (Z2) comportant encore des entrées reliées aux sorties de l'horloge numérique (Z1) et qui sont actives quand le chiffre de dizaine d'heure est 1 ou 2, respectivement, les points de croisement (D3 à D17) de la matrice (14) étant sélectivement connectés suivant les différents programmes de fonctionnement prévus par les contacts électroniques (X7 à X9) qui sont montés sur lesdites paires de sortie et commandé par le circuit de sélection de programme (SP), la sortie du circuit logique (Z2) étant reliée au potentiomètre (P2) de réglage de la valeur de consigne, la tension transmise audit potentiomètre (P2) par la sortie (13) du circuit logique (Z2) variant entre deux valeurs suivant les états logiques des entrées du circuit logique (Z2).

2) Dispositif suivant la revendication 1, caractérisé en ce que le circuit de sélection de programme (SP) a des sorties directement reliées audit circuit logique (Z2) pour forcer le potentiel de la sortie dudit circuit logique à une valeur ou une autre, quelle que soit l'heure.

3) Dispositif suivant la revendication 1 ou 2, caractérisé en ce que le thermostat (10) comprend un relais bistable, des moyens pour alimenter la bobine (SW) du relais bistable dans un sens ou dans l'autre pendant les changements d'états successifs de la sortie du détecteur de température du thermostat, un contact (SW.2) dudit relais bistable fermant ou ouvrant le circuit de sortie (F3, F4) du thermostat, et des moyens pour couper l'alimentation de la bobine (SW) entre les changements d'état de la sortie dudit détecteur de temperature.

4) Dispositif suivant la revendication 3, caractérisé en ce que la sortie dudit détecteur de température, à l'état haut pour une demande de chaleur et à l'état bas dans le cas contraire, est reliée, aux deux premières entrées d'une première et d'une seconde porte NON-ET (G1, G2) directement et à travers un inverseur (INV2), les secondes entrées des premières et secondes portes NON-ET (G1, G2) étant respectivement reliées au contact fixe de travail et au contact fixe de repos d'un second contact (SW.1) de la bobine (SW) dont le contact mobile est à l'état bas, les sorties des première et seconde portes NON-ET (G1, G2) étant respectivement reliées aux entrées de commande d'un premier et d'un second contact électronique, le premier contact électronique étant monté entre la borne positive d'une première pile (S1, S2) et la première borne de la bobine (SW) dont la seconde borne est reliée à la borne négative de la première pile (S1, S2), et le second contact électronique étant monté entre la borne négative d'une seconde pile (S3) et la première borne de la bobine (SW) dont la seconde borne est reliée à la borne positive de la seconde pile (S3), le premier contact SW.2 étant ouvert en position de repos.

5) Dispositif suivant la revendication 4, caractérisé en ce qu'entre la seconde entrée de la première porte NON-ET et le contact fixe correspondant du second contact (SW.1) est prévu un circuit à retard (R26, C6).

6) Dispositif suivant l'une des revendications 1 à 5, caractérisé en ce que ladite horloge numérique (Z1, DA) est alimentée par la source de piles (S1, S2, S3).

7) Dispositif suivant l'une des revendications 1 à 6, caractérisé en ce qu'entre la borne de sortie panneau arrière (38) de l'horloge (Z1) et la borne d'entrée correspondante (40) de l'afficheur (DA) est monté un inverseur (X15, X16) dont l'autre borne d'entrée est reliée à la sortie de clignotement (9) du circuit numérique (Z1) de l'horloge, l'inverseur (X15, X16) étant commandé par un circuit de mesure de la tension aux bornes de la source à piles (S1, S2, S3) qui commute la borne de sortie de clignotement (9) vers l'entrée (40) de signal de panneau arrière de l'afficheur (DA) quand ladite tension descend au-dessous d'un seuil prédéterminé.

**Patentansprüche**

1. Raumthermostateinrichtung mit Tageszeitprogrammgeber, mit einem Thermostat (10), einer digitalen Uhr (Z1) mit einer siebensegmentigen Anzeigeeinrichtung (DA), einem Programmwählkreis (SP) mit zwei Temperaturbezugswerten, einem Bezugswert-Schaltgerät (15) und einem Steuerkreis (14, N/D) zum Steuern des Bezugswert-Schaltkreises, wobei der Steuerkreis überwacht wird durch die digitalen Ausgangssignale der digitalen Uhr (Z1) und des Programmwählkreises (SP), dadurch gekennzeichnet, daß der Steuerkreis (14, N/D) einen Digital/Dezimal-Wandler (N/D) und eine Kreuzpunktmatrix (14) aufweist, daß der Digital/Dezimal-Wandler (N/D) mit der digitalen Uhr (Z1) verbunden ist und die digitalen Daten der Stundeneinheit in ein Ein-aus-Zehn-Code-Signal umwandelt, daß die zehn Ausgänge (E0 bis E9) des Wandlers (N/D) an die vertikalen Drähte der Kreuzpunktmatrix (14) gelegt sind, welche drei Paare von Ausgangsdrähten (00 bis 05) aufweist, daß die Ausgangspaare entsprechend den Stunden zugeordnet sind, von denen die zehnten Ziffern 2, 1 und 0 sind, daß ferner der Bezugswertschaltkreis (15) einen logischen Kreis (Z1) und einen Satz von elektronischen Schaltern (X7 bis X10) aufweist, daß die Ausgangspaare (00 bis 05) an die entsprechenden Eingänge des logischen Kreises (Z2) gelegt sind, der ferner eine Anzahl von Eingängen hat, die mit Ausgängen der digitalen Uhr (Z1) verbunden sind, welche angesteuert werden, wenn die zehnte Stundenziffer entsprechend 1 oder 2 ist, daß die Matrix-Kreuzungspunkte (D3 bis D17) selektiv entsprechend mit verschiedenen Operationsprogrammen verbunden sind, die durch die elektronischen Schalter (X7 bis X9) bestimmt sind, die an diesen Ausgangspaaren angebracht und durch den Programmwählkreis (SP) gesteuert werden, daß der Ausgang des logischen Kreises (Z2) an ein Bezugswert-Einstellpotentiometer (P2) gelegt ist, und daß die an dieses Potentiometer (P2) vom Ausgang (13) des logischen Kreises (Z2) gelegte Spannung zwischen zwei Werten variiert, entsprechend der logischen Zustände der Eingänge des logischen Kreises (Z2).

2. Raumthermostateinrichtung nach Anspruch 1, dadurch gekennzeichnet, daß der Programmwählkreis (SP) eine Anzahl von Ausgängen hat, die direkt an den logischen Kreis (Z2) angeschlossen sind, um das Ausgangspotential dieses logischen Kreises auf einen Wert oder einen anderen zu bringen, wie immer die Zeit ist.

3. Raumthermostateinrichtung nach Anspruch 1 oder 2, dadurch gekennzeichnet, daß der Thermostat (10) ein bistabiles Relais aufweist, ferner Mittel zum Entregen der bistabilen Relaiswicklung (SW) in einer Richtung oder der anderen während der aufeinanderfolgenden Zustandsänderungen des Ausgangssignales des Thermostat-Temperatursensors, daß ferner ein Schalter (SW2) des bistabilen Relais den Thermostatausgangskreis (F3, F4) schließt oder öffnet, und daß Mittel vorgesehen sind, um die Wicklung (SW) des bistabilen Relais zwischen den Zustandsänderungen dieses Ausgangssignales zu entregen.

4. Raumthermostateinrichtung nach Anspruch 3, dadurch gekennzeichnet, daß der Ausgang des Temperatursensors, der auf einem hohen Pegel bei Wärmebedarf und einem niedrigen Pegel im andern Fall liegt, an die ersten zwei Eingänge von ersten und zweiten NAND-Toren (G1, G2) direkt über einen Inverter (INV2) an die zweiten Eingänge des ersten und des zweiten NAND-Tores (G1, G2) gelegt ist, welche entsprechend dem stationären Schließkontakt und dem stationären Unterbrechungskontakt eines zweiten Schalters (SW.1) der bistabilen Relaiswicklung (SW) verbunden ist, deren beweglicher Kontakt sich auf niedrigem Pegel befindet, daß ferner die Ausgänge des ersten und des zweiten NAND-Tores (G1, G2) entsprechend an die Steuereingänge von ersten und zweiten elektronischen Schältern gelegt sind, wobei der erste elektronische Schalter zwischen der positiven Klemme einer ersten primären Zelle (S1, S2) und der ersten Klemme der Wicklung (SW) liegt, deren zweite Klemme mit der negativen Kontaktklemme der ersten primären Zelle (S1, S2) verbunden ist, und daß der zweite elektronische Schalter zwischen der negativen Klemme der zweiten primären Zelle (S3) und der ersten Klemme der Wicklung (SW) liegt, deren zweite Klemme mit der positiven Klemme der zweiten primären Zelle (S3) verbunden ist, und daß der erste Schalter (SW.2) in Ruheposition geöffnet ist.

5. Raumthermostateinrichtung nach Anspruch 4, dadurch gekennzeichnet, daß ein Verzögerungskreis (R26, C6) zwischen dem zweiten Eingang des ersten NAND-Tores und dem entsprechenden stationären Kontakt des zweiten Schalters (SW.1) gelegt ist.

6. Raumthermostateinrichtung nach einem der Ansprüche 1-5, dadurch gekennzeichnet, daß die digitale Uhr (Z1, DA) durch die Zellen (S1, S2, S3) gespeist wird.

7. Raumthermostateinrichtung nach einem der Ansprüche 1-6, dadurch gekennzeichnet, daß ein Inverter (X15, X16) zwischen der hinteren Ausgangsklemme (38) der digitalen Uhr (Z1) und der entsprechenden Eingangsklemme (40) der Anzeigeeinrichtung (DA) geschaltet ist, daß die andere Eingangsklemme des Inverters (X15, X16) mit dem Blink-Ausgang (9) des digitalen Kreises (Z1) der Uhr verbunden ist, daß ferner der Inverter (X15, X16) durch einen Kreis gesteuert wird, der die Spannung der Zellen (S1, S2, S3) mißt und die blinkende Ausgangsklemme (9) an den hinteren Signaleingang (40) der Anzeigeeinrichtung (DA) schaltet, wenn diese Spannung unter einen vorgegebenen Schwellwert fällt.


**Claims**

1) A room thermostat device with a day-time programmer, comprising a thermostat (10), a digital clock (Z1) with a seven segment display device (DA), a program selection circuit (SP) with two temperature reference values, a reference value switching device (15) and a control circuit (14, N/D) for controlling the reference value switching circuit, said control circuit being monitored by the digital output signals of the digital clock (Z1) and the program selection circuit (SP), characterized in that the control circuit (14, N/D) comprises a digital/decimal converter (N/D) and a crosspoint matrix (14), the digital/decimal converter (N/D) being connected to the digital clock (Z1) and converting the hour unit digital data into a one-out-of ten code signal, the ten outputs (E0 to E9) of the converter (N/D) being connected to the vertical wires of the cross-point matrix (14) that comprises three pairs of output wires (00 to 05), said output pairs being respectively assigned to the hours of which the tenth figures are 2, 1 and 0, in that the reference value switching circuit (15) comprises a logical circuit (Z2) and a set of electronic switches (X7 to X10), said output pairs (00 to 05) being connected to the corresponding inputs of the logical circuit (Z2) which has also a number of inputs connected from outputs of the digital clock (Z1) that are enabled when the hour tenth figure is 1 or 2 respectively, matrix cross-points (D3 to D17) being selectively connected responsive to various operation programs defined by the electronic switches (X7 to X9) that are mounted on said output pairs and controlled by the program selection circuit (SP), the output of the logical circuit (Z2) being connected to a reference value adjusting potentiometer (P2), the voltage transmitted to said potentiometer (P2) from the output (13) of the logical circuit (Z2) varying between two values responsive to the logical conditions of the inputs of the logical circuit (Z2).

2) A room thermostat device according to claim 1, characterized in that the program selection circuit (SP) has a number of outputs directly connected to the logical circuit (Z2) in order to bear the output potential of said logical circuit to a value or another one, whatever be the time.

3) A room thermostat device according to claim 1 or 2, characterized in that the thermostat (10) comprises a bistable relay, means for energizing the bistable relay coil (SW) in one direction or the other during the successive condition changes of the output signal of the thermostat temperature sensor, a switch (SW.2) of said bistable relay closing or opening the thermostat output circuit (F3, F4) and means for deenergizing the bistable relay coil (SW) between the condition changes of said output signal.

4) A room thermostat device according to claim 3, characterized in that the output of said temperature sensor, being at high level for a heat demand and low level in the other case, is connected to the first two inputs of first and second NAND gates (G1, G2) directly and, through an inverter (INV2), to the second inputs of said first and second NAND gates (G1, G2) being respectively connected from the stationnary make contact and the stationnary break contact of a second switch (SW.1) of the bistable relay coil (SW) whose moving contact is at low level, the outputs of the first and second NAND gates (G1, G2) being respectively connected to the control inputs of first and second electronic switches, the first electronic switch being mounted between the positive terminal of a first primary cell (S1, S2) and the first terminal of the coil (SW) the second terminal of which is connected to the negative contact terminal of the first primary cell (S1, S2), and the second electronic switch being mounted between the negative terminal of the second primary cell (S3) and the first terminal of the coil (SW) the second terminal of which is connected to the positive terminal of the second primary cell (S3), the first switch (SW.2) being open when at rest position.

5) A room thermostat device according to claim 4, characterized in that a delay circuit (R26, C6) is mounted between the second input of the first NAND gate and the corresponding stationnary contact of the second switch (SW.1).

6) A room thermostat device according to any one of claims 1 to 5, characterized in that the said digital clock (Z1, DA) is supplied by the primary cell source (S1, S2, S3).

7) A room thermostat device according to any one of claims 1 to 6, characterized in that an inverter (X15, X16) is mounted between the back panel output terminal (38) of the digital clock (Z1) and the corresponding input terminal (40) of the display device (DA), the other input terminal of the inverter (X15, X16) being connected to the blinking output (9) of the clock digital circuit (Z1), the inverter (X15, X16) being controlled by a circuit which measures the voltage of the primary cells (S1, S2, S3) and switches the blinking output terminal (9) to the back panel signal input (40) of the display device (DA) when said voltage falls below a predetermined threshold value.

FIG.1

FIG.6

FIG.2

FIG.3

# FIG.4

FIGS.5

FIG.8

FIG.7

FIG.9